# FASCICULE DE BREVET EUROPEEN

(11) **EP 1 927 781 B1**
(45) Date de publication et mention de la délivrance du brevet: **14.07.2010**
(21) Numéro de dépôt: 07121450.6
(22) Date de dépôt: 23.11.2007
(51) Int. Cl.: F16F 1/12, F16F 3/04, F16F 15/134

(54) **Dispositif élastique comportant des ressorts concentriques et son procédé de fabrication**
Elastische Vorrichtung, die konzentrische Federn umfasst, und deren Herstellungsverfahren
Elastic device comprising concentric springs and its manufacturing process

(30) Priorité: 29.11.2006 FR 0655175
(43) Date de publication de la demande: 04.06.2008
(73) Titulaire: Valeo Embrayages, 80009 Amiens (FR)
(72) Inventeur: Bonfilio, Ciriaco, 92110 Clichy (FR)
(74) Mandataire: Lemaire, Marc

(56) Documents cités:
- DE-A1- 10 222 778
- DE-A1- 19 506 422
- DE-B- 1 159 226
- FR-A1- 2 730 290
- FR-A1- 2 742 509
- FR-A1- 2 775 745
- US-A- 5 482 261

## Description

L'invention concerne un dispositif élastique comportant des premier et deuxième ressorts hélicoïdaux concentriques coaxiaux, une spire de liaison du premier ressort étant solidarisée à une spire de liaison du deuxième ressort. L'invention se rapporte également à un amortisseur de torsion pour véhicule automobile comprenant un tel dispositif élastique, ainsi qu'à un procédé de fabrication d'un tel dispositif élastique. Un tel dispostif est connnu de DE-1-10222778.

On connaît de FR 2 775 745, un dispositif élastique comportant des premier et deuxième ressorts concentriques coaxiaux, les deux ressorts étant liés au niveau de spires de liaisons de manière à interdire tout déplacement relatif des deux ressorts. Pour cela, le premier ressort est logé à l'intérieur des spires du deuxième ressort et le premier ressort comporte des spires de liaison dont au moins une spire a un diamètre moyen plus grand que celui des spires de liaison du deuxième ressort de manière à ce qu'au moins une spire de liaison du premier ressort puisse se chevaucher avec une spire de liaison du deuxième ressort. Les ressorts que l'on peut ainsi lier entre eux sont spécifiques car ils doivent présenter des spires dont les diamètres permettent ladite liaison.

De plus, la réalisation de la liaison entre les deux ressorts est complexe, en particulier lorsque les ressorts présentent des raideurs importantes. En effet la réalisation de la liaison nécessite un chevauchement des spires de liaison du premier ressort et de celles du deuxième ressort.

Il existe donc un besoin permanent pour des nouveaux dispositifs élastiques comportant deux ressorts concentriques liés entre eux de manière à interdire tout déplacement axial relatif d'au moins certaines spires desdits ressorts. Ladite liaison doit être fiable, économique et facile à réaliser.

La présente invention a pour but de répondre à ce besoin.

On atteint ce but de l'invention avec un dispositif élastique comportant des premier et deuxième ressorts hélicoïdaux concentriques coaxiaux, une spire de liaison du premier ressort étant solidarisée à une spire de liaison du deuxième ressort, comportant une entretoise conformée de manière à empêcher tout déplacement relatif axial, au moins dans un sens, entre lesdites spires de liaison, et ainsi assurer ladite solidarisation, ledit dispositif étant remarquable en ce que l'entretoise est sensiblement en forme de bague écrasée de manière à couvrir sensiblement complètement la spire de liaison du premier ressort.

L'utilisation d'une entretoise en forme de bague écrasée pour lier les ressorts du dispositif élastique selon l'invention permet avantageusement de faciliter le montage dudit dispositif. En effet, il n'est plus nécessaire que le premier ressort chevauche le deuxième ressort.

Avantageusement, la liaison de ressort au moyen d'une entretoise permet de lier entre eux un grand nombre de types de ressorts. Le coût du dispositif élastique selon l'invention est donc avantageusement réduit.

L'art antérieur, que ce soit par exemple FR 2730290 A1 ou DE 90222778 A1 ne décrit ni ne suggère une entretoise en forme de bague écrasée. En effet, il décrit soit une entretoise très molle et sans résistance de frottement suffisante aux efforts, soit une entretoise rigide. Le concept de l'invention, à savoir une pièce suffisamment molle pour être déformée sur la spire de liaison du premier ressort, et suffisamment rigide pour se coincer et empêcher un mouvement ultérieur à la déformation, n'est ni décrit ni suggéré dans lesdits documents.

De préférence, le dispositif élastique selon l'invention comporte une, et de préférence encore plusieurs, des caractéristiques optionnelles suivants
- Les ressorts sont de longueur différente.
- Le premier ressort est logé, au moins en partie, à l'intérieur du deuxième ressort, de préférence le premier ressort est moins long que le deuxième.
- Le diamètre extérieur de la spire de liaison du premier ressort est inférieur ou égal au diamètre intérieur de la spire de liaison du deuxième ressort, l'entretoise étant disposée dans l'espace libre ainsi défini par lesdites spires de liaisons. De préférence, le diamètre extérieur de l'ensemble des spires du premier ressort est inférieur ou égal au diamètre intérieur de l'ensemble des spires du deuxième ressort.
- Au moins une spire de liaison du premier ressort et/ou du deuxième ressort est une spire morte.
- L'entretoise est en tôle déformable.
- Les spires de liaison du premier ressort ont un diamètre extérieur inférieur à celui de spires adjacentes du même ressort.
- Les spires de liaison du premier ressort et/ou deuxième ressort sont situées aux extrémités desdits ressorts.

L'invention concerne aussi un amortisseur de torsion pour véhicule automobile, en particulier un double volant amortisseur, qui comprend un dispositif élastique selon l'invention, par exemple entre un volant d'entrée et un volant de sortie.

Avantageusement, l'utilisation d'un dispositif élastique selon l'invention dans un amortisseur de torsion permet de faciliter le montage dudit amortisseur et de réduire son coût.

L'invention concerne aussi un procédé de fabrication d'un dispositif élastique selon l'invention comportant des premier et deuxième ressorts concentriques coaxiaux, remarquable en ce qu'on coiffe une spire de liaison du premier ressort d'une bague qu'on force à occuper l'espace libre entre les spires de liaison des deux ressorts concentriques, de manière à interdire tout déplacement axial relatif, au moins dans un sens, de ces spires de liaison.

Avantageusement, un tel procédé permet de lier les ressorts d'un dispositif élastique selon l'invention.

Selon un mode de réalisation préféré, le procédé de liaison selon l'invention comporte une, et de préférence encore plusieurs, des caractéristiques optionnelles suivantes :
- On loge le premier ressort à l'intérieur du deuxième.
- Après avoir introduit le premier ressort à l'intérieur du deuxième ressort la bague déformable se trouve à une extrémité de l'ensemble des deux ressorts et dépasse de l'extrémité du premier ressort d'au moins un tiers de sa longueur.
- Ledit procédé de liaison comprend les étapes successives suivantes :
   ■ coiffage d'au moins une spire de liaison du premier ressort avec une bague déformable,
   ■ le premier ressort étant logé à l'intérieur du deuxième ressort, écrasement, suivant l'axe des ressorts, de la bague de manière à la forcer à occuper l'espace entre la spire de liaison du premier ressort et au moins une spire du deuxième ressort en regard de ladite spire de liaison du premier ressort, solidarisant ainsi lesdits ressorts.

D'autres caractéristiques et avantages de la présente invention apparaîtront à la lecture de la description qui va suivre et à l'examen des figures annexées dans lesquelles :
- les figures 1 a à 1 d représentent en coupe axiale un dispositif élastique selon l'invention au cours des étapes d'un procédé de fabrication selon l'invention, le diamètre extérieur de l'ensemble des spires du ressort intérieur étant constant sur toute la longueur dudit ressort ;
- les figures 2a à 2d représentent en coupe axiale un dispositif élastique selon l'invention au cours des étapes d'un procédé de fabrication selon l'invention, le diamètre extérieur des spires mortes du ressort intérieur étant inférieur au diamètre extérieur des autres spires dudit ressort.

On entend par spires mortes d'un ressort des spires jointives qui augmentent la longueur dudit ressort sans changer la raideur dudit ressort.

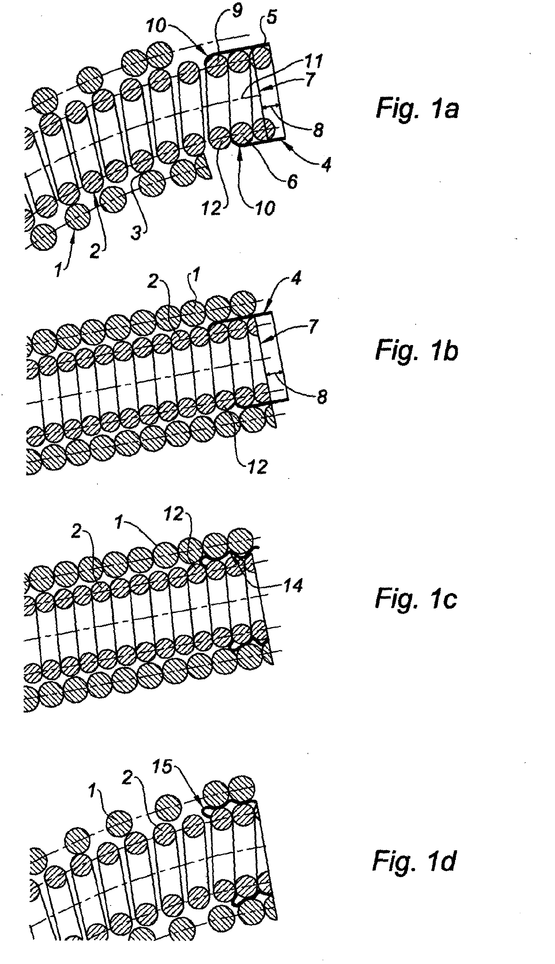

On se reporte à présent à la figure 1 a sur laquelle on a représenté la première étape d'un procédé de fabrication d'un dispositif selon l'invention. Un ressort intérieur 2 est introduit dans un ressort extérieur 1. Les deux ressorts concentriques et coaxiaux, d'axe 11 sont au repos. Le diamètre intérieur du ressort extérieur 1 et le diamètre extérieur du ressort intérieur 2 sont tels qu'il existe un jeu 3 entre lesdits ressorts.

On coiffe les spires mortes 6 du ressort intérieur d'une entretoise sous la forme d'une bague en tôle 4. Ladite bague en tôle 4 présente une épaisseur 5 inférieure ou égale au jeu 3 entre les ressorts 1 et 2. L'extrémité 10 de la bague en tôle 4 est recourbée en direction de l'axe 11 et suit la spire 9 du ressort intérieur 2.

On peut monter ladite entretoise sur les spires mortes 6 du ressort intérieur soit par vissage soit par pinçage.

L'extrémité recourbée 10 de la bague 4 est placée en butée contre la spire 12 du ressort intérieur 1. L'autre extrémité de la bague 4, opposée à l'extrémité 10, doit dépasser du plan 7 d'une longueur d'écrasement 8. Par exemple, la longueur d'écrasement représente environ un tiers de la longueur totale de l'entretoise.

La figure 1b représente l'étape de compression d'un procédé selon l'invention, les mêmes ressorts extérieur 1 et intérieur 2 étant comprimés contre le plan 7.

La figure 1c représente l'étape d'écrasement de l'entretoise d'un procédé selon l'invention, les mêmes ressorts extérieur 1 et intérieur 2 étant maintenus en compression. On écrase axialement la bague 4 contre la spire 12 du ressort intérieur 2. La matière qui compose la longueur d'écrasement de la bague 4 vient alors occuper l'espace 14 entre les spires de liaison des deux ressorts 1 et 2.

Finalement, la figure 1d représente un dispositif élastique selon l'invention comprenant les ressorts extérieur 1 et intérieur 2 de retour en position relâchée. La tôle écrasée présente de préférence un retour 15 qui améliore la liaison entre les deux ressorts.

Avantageusement, le retour 15 permet d'interdire tout déplacement relatif axial des deux ressorts.

De préférence, la bague 4 est fendue et présente des rainures et/ou des affaiblissements localisés afin d'orienter le tortillement de la tôle au moment de l'écrasement.

Avantageusement, l'écrasement conduit ainsi à une entretoise de forme optimale pour lier les deux ressorts.

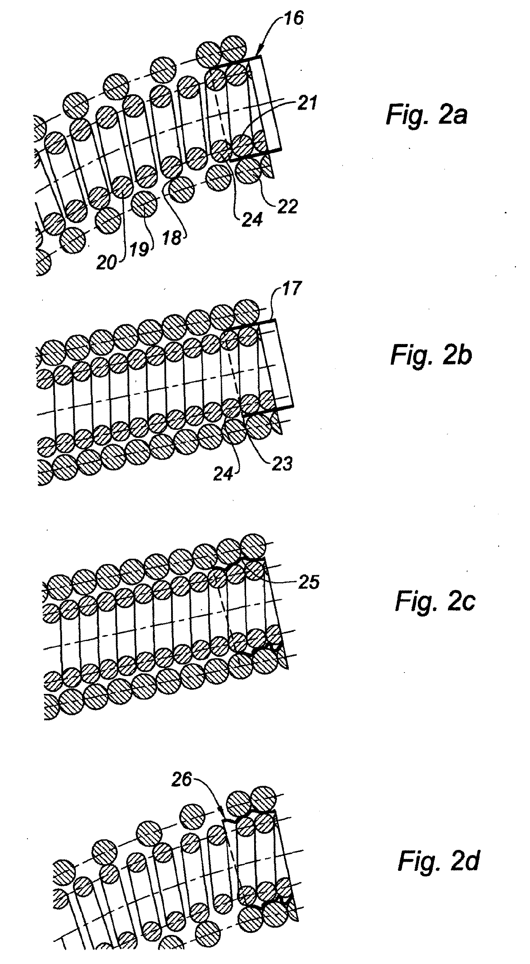

On se reporte à présent à la figure 2a sur laquelle on a représenté la première étape d'un procédé de fabrication d'un dispositif selon l'invention. Un ressort intérieur 20 est introduit dans un ressort extérieur 19 . Les deux ressorts concentriques et coaxiaux sont au repos. Le diamètre intérieur du ressort extérieur 19 et le diamètre extérieur du ressort intérieur 20 sont tels qu'il existe un jeu 18 entre lesdits ressorts.

On coiffe les spires mortes 21 du ressort intérieur 20 d'une entretoise sous la forme d'une bague en tôle 16. Ladite bague en tôle 16 présente une épaisseur 17 inférieure ou égale au jeu 18 entre les ressorts 19 et 20. Les spires mortes 21 du ressort intérieur 20 présentent un diamètre extérieur strictement inférieur à celui des autres spires dudit ressort intérieur 20.

L'extrémité intérieure 23 de la bague 1 vient en butée contre la première spire 24 de plus grand diamètre du ressort intérieur 20. L'autre extrémité de la bague 16 dépasse d'une longueur d'écrasement. De préférence, la longueur d'écrasement représente un tiers de la longueur totale de l'entretoise.

La figure 2b représente l'étape de compression d'un procédé selon l'invention, les mêmes ressorts extérieur 19 et intérieur 20 sont comprimés. Cette compression augmente encore un peu le diamètre extérieur de la spire 24, offrant une meilleure butée pour la bague 16.

La figure 2c représente l'étape d'écrasement de l'entretoise d'un procédé selon l'invention, les mêmes ressorts extérieur 19 et intérieur 20 étant maintenus en compression. On écrase axialement la bague 16 contre la spire 23 du ressort intérieur 20. La matière qui compose la longueur d'écrasement de la bague 16 vient occuper l'espace 25 entre les deux ressorts 19 et 20.

La figure 2d représente un dispositif élastique selon l'invention comprenant les ressorts extérieur 19 et intérieur 20 de retour en position relâchée. La tôle écrasée 26 de la bague 16 joue le rôle d'entretoise en assurant la liaison entre les deux ressorts.

Bien entendu, la présente invention n'est pas limitée aux différents modes de réalisation décrits, représentés et fournis à titre d'exemples illustratifs et non limitatifs.

En particulier, le nombre de spires mortes sur le ressort intérieur n'est pas limitatif, de même que le matériau utilisé pour la bague ainsi que la forme de ladite bague.

## Revendications

1. Dispositif élastique comportant des premier (2) et deuxième (1) ressorts hélicoïdaux concentriques coaxiaux, une spire de liaison du premier (6) ressort étant solidarisée à une spire de liaison du deuxième ressort, comportant une entretoise (15) conformée de manière à empêcher tout déplacement relatif axial, au moins dans un sens, entre lesdites spires de liaison, et ainsi assurer ladite solidarisation, ledit dispositif étant **caractérisé en ce que** l'entretoise (15) est sensiblement en forme de bague écrasée de manière à couvrir sensiblement complètement la spire de liaison du premier ressort.

2. Dispositif élastique selon la revendication 1, **caractérisé en ce que** le premier ressort (2) est logé, au moins en partie, à l'intérieur du deuxième ressort (1).

3. Dispositif élastique selon l'une quelconque des revendications 1 et 2, **caractérisé en ce que** le diamètre extérieur de la spire de liaison (6) du premier ressort (2) est inférieur au diamètre intérieur de la spire de liaison du deuxième ressort (1), l'entretoise étant disposée dans l'espace libre (14) ainsi défini par lesdites spires de liaison.

4. Dispositif élastique selon l'une quelconque des revendications précédentes, **caractérisé en ce qu'**au moins une spire de liaison du premier ressort (2) et/ou du deuxième ressort (1) est une spire morte.

5. Dispositif élastique selon l'une quelconque des revendications précédentes, **caractérisé en ce qu'**au moins une spire de liaison du premier ressort a un diamètre extérieur inférieur à celui de spires adjacentes du même ressort.

6. Dispositif élastique selon l'une quelconque des revendications précédentes, **caractérisé en ce que** l'entretoise (15) est en tôle déformable.

7. Amortisseur de torsion pour véhicule automobile comprenant un dispositif élastique selon l'une quelconque des revendications précédentes.

8. Procédé de fabrication d'un dispositif élastique selon les revendications 1 à 6, comprenant les étapes successives suivantes :
■ coiffage d'au moins une spire de liaison du premier ressort avec une bague (4) déformable,
■ le premier ressort (2) étant logé à l'intérieur du deuxième ressort (1), écrasement, suivant l'axe des ressorts, de la bague de manière à la forcer à occuper l'espace (14) entre la spire de liaison du premier ressort et au moins une spire du deuxième ressort en regard de ladite spire de liaison du premier ressort, solidarisant ainsi lesdits ressorts.

9. Procédé selon la revendication 8, **caractérisé en ce que**, après avoir introduit le premier ressort à l'intérieur du deuxième ressort, la bague déformable se trouve à une extrémité de l'ensemble des deux ressorts et dépasse de l'extrémité du premier ressort d'au moins un tiers de sa longueur.

## Claims

1. Resilient device comprising first (2) and second (1) coaxial concentric helical springs, a turn for connection of the first (6) spring being rendered integral with a turn for connection of the second spring, comprising a brace (15) which is formed such as to prevent any axial relative displacement, at least in one direction, between the said connection turns, and thus to assure the said rendering integral, the said device being **characterised in that** the brace (15) is substantially in the form of a ring which is crushed such as to cover substantially completely the connection turn of the first spring.

2. Resilient device according to claim 1, **characterised in that** the first spring (2) is accommodated at least partially in the interior of the second spring (1).

3. Resilient device according to either of claims 1 and 2, **characterised in that that** the outer diameter of the connection turn (6) of the first spring (2) is smaller than the inner diameter of the connection turn of the second spring (1), the brace being disposed in the free space (14) thus defined by the said connection turns.

4. Resilient device according to any one of the preceding claims, **characterised in that** at least one connection turn of the first spring (2) and/or of the second spring (1) is a dead-end turn.

5. Resilient device according to any one of the preceding claims, **characterised in that** at least one connection turn of the first spring has an outer diameter which is smaller than that of the adjacent turns of the same spring.

6. Resilient device according to any one of the preceding claims, **characterised in that** the brace (15) is made of deformable metal plate.

7. Torsion damper for a motor vehicle, comprising a resilient device according to any one of the preceding claims.

8. Method for production of a resilient device according to claims 1 to 6, comprising the following successive steps:
• covering at least one connection turn of the first spring with a deformable ring (4);
• with the first spring (2) accommodated in the interior of the second spring (1), crushing the ring, according to the axis of the springs, such as to force the ring to occupy the space (14) between the connection turn of the first spring and at least one turn of the second spring, opposite the said connection turn of the first spring, thus rendering the said springs integral.

9. Method according to claim 8, **characterised in that**, after having introduced the first spring into the interior of the second spring, the deformable ring is at one end of the assembly of the two springs, and extends beyond the end of the first spring by at least a third of its length.

## Patentansprüche

1. Elastische Vorrichtung, umfassend eine erste (2) und eine zweite (1) dazu konzentrische koaxiale Schraubenfeder, wobei eine Verbindungswindung (6) der ersten Feder mit einer Verbindungswindung der zweiten Feder solidarisiert ist, und umfassend einen Zwischenriegel (15), der dazu angepasst ist, jede relative axiale Verschiebung zwischen den besagten Verbindungswindungen zumindest in einer Richtung zu verhindern und auf diese Weise die besagte Solidarisierung sicherzustellen, wobei die Vorrichtung **dadurch gekennzeichnet ist, dass** der Zwischenriegel (15) in etwa die Form eines gestauchten Rings hat, um die Verbindungswindung der ersten Feder in etwa vollständig zu bedecken.

2. Elastische Vorrichtung nach Anspruch 1, **dadurch gekennzeichnet, dass** die erste Feder (2) zumindest teilweise im Inneren der zweiten Feder (1) aufgenommen ist.

3. Elastische Vorrichtung nach Anspruch 1 oder 2, **dadurch gekennzeichnet, dass** der Außendurchmesser der Verbindungswindung (6) der ersten Feder (2) kleiner ist als der Innendurchmesser der Verbindungswindung der zweiten Feder (1), wobei der Zwischenriegel in dem auf diese Weise durch die besagten Verbindungswindungen definierten Freiraum (14) angeordnet ist.

4. Elastische Vorrichtung nach einem der vorherigen Ansprüche, **dadurch gekennzeichnet, dass** mindestens eine Verbindungswindung der ersten Feder (2) und/oder der zweiten Feder (1) eine tote Windung ist.

5. Elastische Vorrichtung nach einem der vorherigen Ansprüche, **dadurch gekennzeichnet, dass** mindestens eine Verbindungswindung der ersten Feder einen Außendurchmesser hat, der kleiner ist als der der benachbarten Windungen derselben Feder.

6. Elastische Vorrichtung nach einem der vorherigen Ansprüche, **dadurch gekennzeichnet, dass** der Zwischenriegel (15) aus einem verformbaren Blech besteht.

7. Torsionsdämpfer für ein Kraftfahrzeug, umfassend eine elastische Vorrichtung nach einem der vorherigen Ansprüche.

8. Verfahren zur Herstellung einer elastischen Vorrichtung nach einem der Ansprüche 1 bis 6, umfassend die folgenden aufeinanderfolgenden Schritte:
- Bedecken von zumindest einer Verbindungswindung der ersten Feder mit einem verformbaren Ring,
- während die erste Feder (2) im Inneren der zweiten Feder (1) aufgenommen ist eine Verformung des Rings entlang der Achse der Federn, um ihn zu zwingen, den Raum (14) zwischen der Verbindungswindung der ersten Feder und mindestens einer der besagten Verbindungswindung der ersten Feder zugewandten Windung der zweiten Feder einzunehmen, wodurch die Federn solidarisiert werden.

9. Verfahren nach Anspruch 8, **dadurch gekennzeichnet, dass** nachdem die erste Feder in das Innere der zweiten Feder eingebracht ist, sich der verformbare Ring an einem Ende der Gruppe der beiden Federn befindet und über das Ende der ersten Feder um zumindest ein Drittel seiner Länge hinausragt.
